(19) Europäisches Patentamt
European Patent Office
Office européen des brevets

(11) **EP 2 025 933 B1**

(12) **EUROPEAN PATENT SPECIFICATION**

(45) Date of publication and mention
of the grant of the patent:
**27.03.2019  Bulletin 2019/13**

(51) Int Cl.:
**F04B 1/29** [(2006.01)]   **F04B 49/06** [(2006.01)]
**F02C 9/26** [(2006.01)]

(21) Application number: **08161293.9**

(22) Date of filing: **28.07.2008**

(54) **Dual mode compensation for variable displacement pump metering system**

Dualmodus-Kompensierung für ein Pumpmesssystem mit variabler Verdrängung

Compensation à mode double pour système de mesure de pompe à déplacement variable

(84) Designated Contracting States:
**DE FR GB**

(30) Priority: **30.07.2007  US 952717 P**
**21.11.2007  US 943755**

(43) Date of publication of application:
**18.02.2009  Bulletin 2009/08**

(73) Proprietor: **Honeywell International Inc.**
**Morris Plains, NJ 07950 (US)**

(72) Inventors:
• **Rowan, William Scott**
**South Bend, IN 46530 (US)**
• **Portolese, Larry**
**Granger, IN 46530 (US)**
• **McRoberts, Brad**
**Mishawaka, IN 46545 (US)**
• **Weiger, George**
**Niles, MI 49120 (US)**

(74) Representative: **Houghton, Mark Phillip et al**
**Patent Outsourcing Limited**
**1 King Street**
**Bakewell, Derbyshire DE45 1DZ (GB)**

(56) References cited:
**EP-A1- 1 375 918     GB-A- 1 163 712**
**US-A- 3 596 467      US-A1- 2002 144 512**
**US-B1- 6 412 271**

## Description

This application claims the benefit of U.S. Provisional Application No. 60952,717, filed July 30, 2007.

TECHNICAL FIELD

The present invention generally relates to fluid metering systems and, more particularly, to fluid metering systems that supply minimal waste heat input into the system.

BACKGROUND

Typical gas turbine engine fuel supply systems include a fuel source, such as a fuel tank, and one or more pumps that draw fuel from the fuel tank and deliver pressurized fuel to the fuel manifolds and fuel nozzles in the engine combustor via a main supply line. The main supply line may include one or more valves in flow series between the pumps and the fuel manifolds. These valves generally include at least a metering valve and a pressurizing-and-shutoff valve downstream of the metering valve. In some systems, three pumps are used to deliver pressurized fuel. These pumps may include an aircraft or tank level pump, a boost pump, and a high-pressure pump. The boost pump is typically a centrifugal pump and the high-pressure pump is typically a gear pump, though in some applications the high-pressure pump may also be a centrifugal pump.

Most fuel supply systems are controlled based on the principle that fuel flow is directly proportional to the product of the metering valve area and the square root of the pressure drop across the metering valve. There are some exceptions to this control scheme, such as systems that are based on direct volumetric delivery of fuel. Given the fundamental physics of controlling fuel flow by varying metering valve area and maintaining the pressure drop across the metering valve, the method of varying the area results in moving or displacing a valve in a manner that results in flow area varying exponentially. The manner in which pressure drop is typically controlled depends on whether the high-pressure pump is a gear pump or a centrifugal pump. Nonetheless, the high-pressure pump is sized to have some excess flow capability at all times.

If the high-pressure pump is a gear pump, then the fuel supply system typically includes some type of bypass subsystem to maintain the pressure drop across the metering valve and to recirculate excess flow back to the inlet of the high-pressure pump. This flow recirculation puts more work into the fuel, thereby increasing its temperature. In some systems, this temperature increase may be in the range of 20-60°F. If the high-pressure pump is a centrifugal pump, the metering valve pressure drop is controlled by throttling flow, choking, or otherwise restricting the output of the pump. This also typically results in increased fuel temperature, as more work is being put into the fuel.

Fuel supply systems that use a variable displacement piston pump to regulate flow across a metering valve typically have two operational modes: normal mode and shutdown mode. During normal mode operation, the system supplies fuel to the engine combustor as a function of metering valve flow area. The variable displacement piston pump provides flow to the metering valve to maintain the pressure drop across the metering valve. Since engine nozzle backpressure is a function of metered flow, the discharge pressure of the variable displacement piston pump varies as a function of metered flow to insure a constant pressure drop across the metering valve. Hence, during normal mode operation the variable displacement piston pump operates in accordance with a variable discharge pressure, variable flow scheme. During shutdown mode operation, a shutoff valve is closed, thereby terminating fuel flow to the nozzles; however, the variable displacement piston pump may still be driven. As a result the pump may be driven to maximum displacement and flow. This in turn may cause the system to bypass flow to a pressure relief valve, dumping a great deal of waste heat into the system.

Each of the aforementioned fuel supply system architectures exhibit an unwanted fuel temperature increase. In modern engine and airframe environment, fuel may also be used as a heat sink for the engine oil and other aircraft heat loads, such as environmental controls, electric power generation, and others. It is desirable from a thermodynamic point of view to transfer as much of the waste heat from these heat loads into the fuel as is possible so that the engine turbines can extract that energy. However, in many instances the waste heat from these heat loads exceeds the capacity for the fuel, without overheating the fuel. It is thus becoming increasingly desirable to minimize the self-heating of the fuel system.

US2002/144512 discloses a variable displacement compressor has a control valve for controlling the displacement of the compressor. When the pressure in a discharge chamber of the compressor (discharge pressure) is equal to or higher than a first threshold value, a controller sets a duty ratio, which is sent to the control valve, to zero % to limit the discharge pressure. As a result, the compressor displacement is minimized and the discharge pressure is lowered. GB1163712 discloses a fuel system for a gas turbine engine comprises a pump 10, a throttle valve 18 through which fuel may flow to a main burner of the engine, means for controlling the output of the pump in accordance with the opening of the throttle valve, a shut-off valve 25 disposed downstream of the throttle valve which may be actuated to prevent fuel flow to the main burner, and means for supplying fuel to a starter burner.

Hence, there is a need for a gas turbine engine fuel supply system that includes a variable displacement piston pump that may be operated in an alternative mode, other than variable discharge pressure/variable flow, during shutdown mode operation of the system. The present invention addresses at least this need. There is also a need for a fuel supply system that minimizes the self-heating of the fuel, and thereby provides a thermodynamically efficient architecture.

BRIEF SUMMARY

The invention is set out in accordance with the appended claims. In one embodiment, and by way of example only, a fluid supply system includes a variable displacement piston pump, a hanger actuator, and a pump compensator. The variable displacement piston pump includes an adjustable hanger that is movable to a plurality of control positions. The variable displacement piston pump is configured to receive a drive torque and, upon receipt of the drive torque, to supply fluid at a pump discharge pressure and flow rate dependent on the control position of the adjustable hanger. The hanger actuator includes a pump control pressure inlet port coupled to receive pump control fluid at a fluid pressure. The hanger actuator is responsive to the fluid pressure of the pump control fluid to move the adjustable hanger to a control position. The pump compensator includes a mode control pressure port and a pump control pressure outlet port. The pump compensator pump control pressure outlet port is in fluid communication with the hanger actuator pump control pressure inlet port. The pump compensator is responsive to fluid pressure at the mode control pressure port to operate in either a normal mode or a shutdown mode. In the normal mode the pump compensator controls the fluid pressure of the pump control fluid such that the variable displacement piston pump is controlled in accordance with a variable flow/variable discharge pressure scheme. In the shutdown mode, the pump compensator controls the fluid pressure of the pump control fluid such that the variable displacement piston pump is controlled in accordance with a variable flow/constant discharge pressure scheme.

In another exemplary embodiment, a fluid supply system includes a variable displacement piston pump, a hanger actuator, and a pump compensator. The variable displacement piston pump includes an adjustable hanger that is movable to a plurality of control positions. The variable displacement piston pump is configured to receive a drive torque and, upon receipt of the drive torque, to supply fluid at a pump discharge pressure and flow rate dependent on the control position of the adjustable hanger. The hanger actuator includes a pump control pressure inlet port coupled to receive pump control fluid at a fluid pressure. The hanger actuator is responsive to the fluid pressure of the pump control fluid to move the adjustable hanger to a control position. The pump compensator includes a mode control pressure port and a pump control pressure outlet port. The pump compensator pump control pressure outlet port is in fluid communication with the hanger actuator pump control pressure inlet port. The pump compensator is responsive to fluid pressure at the operational mode pressure port to operate in either a normal mode or a shutdown mode. The pump compensator includes a mode control valve and a compensator valve. The mode control valve is responsive to fluid pressure at the mode control pressure port to move between a normal mode position and a shutdown mode position. The compensator valve is in fluid communication with the mode control valve and is operable to control the fluid pressure of the pump control fluid such that when the mode control valve is in the normal mode position, the variable displacement piston pump is controlled in accordance with a variable flow/variable discharge pressure scheme, and when the mode control valve is in the shutdown mode position, the variable displacement piston pump is controlled in accordance with a variable flow/constant discharge pressure scheme.

In yet another exemplary embodiment, a method of controlling a variable displacement piston pump that supplies fuel to a gas turbine engine includes determining whether fuel is being supplied to the gas turbine engine. The variable displacement piston pump is controlled to operate in accordance with a variable flow/variable discharge pressure scheme if fuel being supplied to the gas turbine engine, and the variable displacement piston pump is controlled to operate in accordance with a variable flow/constant discharge pressure scheme if fuel is not being supplied to the gas turbine engine.

BRIEF DESCRIPTION OF THE DRAWINGS

The present invention will hereinafter be described in conjunction with the following drawing figures, wherein like numerals denote like elements, and wherein:

FIG. 1 is a simplified schematic diagram of an exemplary embodiment of a fuel delivery and control system for a gas turbine engine;

FIG. 2 is a schematic diagram of an embodiment of an exemplary dual mode pump compensator, in a normal mode, that may be included in the system of FIG. 1 ; and

FIG. 3 is a schematic diagram of the exemplary dual mode pump compensator depicted in FIG. 2 , but in a shutdown mode.

DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention. In this regard, although an embodiment of the invention is described as being implemented in an aircraft, it will be appreciated that the invention may be implemented in numerous and varied end-use environments where fuel flow to a gas turbine engine is controlled. Moreover, the invention is not limited to use as a fuel supply system, but may be used in numerous systems to delivered a meter flow of fluid to one or more loads.

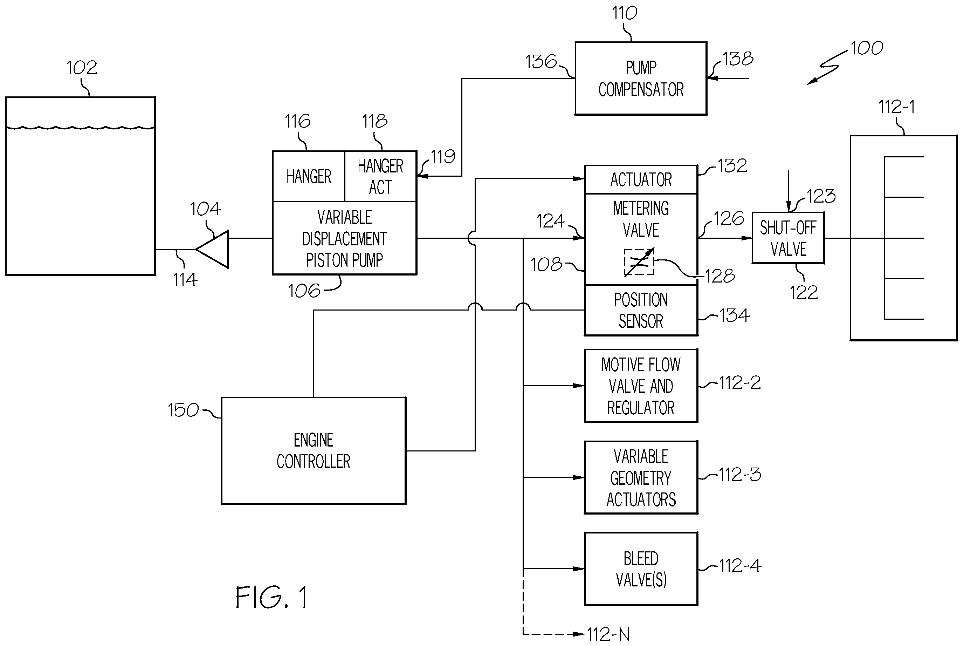

Turning now to FIG. 1 , a simplified schematic diagram of one embodiment of a fuel delivery and control system for a gas turbine engine, such as a turbofan jet aircraft engine, is depicted. The system 100 includes a fuel source 102, one or more pumps 104, 106, metering valve 108, a pump compensator 110 and an engine controller 150. The fuel source 102, which is preferably implemented as one or more tanks, stores fuel that is to be supplied to a plurality of fuel loads 112 (e.g. 112-1, 112-2, 112-3, ... 112-N). It will be appreciated that the number and type of fuel loads may vary, and may include one or more of a gas turbine engine combustor zone and associated nozzles 112-1, a motive flow valve and regulator 112-2, one or more variable geometry actuators 112-3, and one or more bleed valves 112-4, just to name a few.

A supply line 114 is coupled to the fuel source 102 and, via the just-mentioned pumps 104, 106, delivers the fuel to the fuel loads 112. It is noted that the supply line 114 is, for convenience, depicted and described with a single reference numeral. However, it will be appreciated that the system 100 is implemented using separate sections of piping, though a single section is certainly not prohibited. As FIG. 1 further depicts, a shutoff valve 122 is disposed in the supply line 114 downstream of the pumps 104, 106. The shutoff valve 122 is movable between an open position and a closed position. In the depicted embodiment, the shutoff valve 122 is a hydraulically operated valve. In this regard, the depicted shutoff valve 122 includes a position control pressure port 123 that is at least selectively in fluid communication with a fluid pressure source. The shutoff valve 122 is responsive to the fluid pressure at the position control pressure port 123 to move between the open and closed positions. It will be appreciated that in some embodiments the shutoff valve may also function to ensure there is a minimum system pressure magnitude in portions of the supply line 114, and to shut when the pressure falls below this minimum pressure magnitude.

Each of the one or more pumps 104, 106 is positioned in flow-series in the supply line 114 and take a suction on the fuel source 102. In the depicted embodiment, two engine-driven pumps are used and include a boost pump 104, such as a relatively low horsepower centrifugal pump, and a high-pressure pump 106, such as a variable displacement piston pump. The boost pump 104 takes a suction directly on the fuel source 102 and provides sufficient suction head for the high-pressure pump 106. The high-pressure pump 106, a preferred embodiment of which will now be described, then supplies the fuel at a relatively high pressure to the remainder of the supply line 114. Although not depicted, it will be appreciated that the system 100 may additionally include a low-pressure pump within the fuel tank(s) 102 to supply fuel to the boost pump 104.

The high-pressure pump 106, as noted above, is preferably a variable displacement piston pump, and includes an adjustable hanger 116, and a hanger actuator 118. As is generally known, a variable displacement piston pump can be adjusted to increase or decrease the amount of fuel it supplies. More specifically, the adjustable hanger 116, or swash plate as it is sometimes referred to, is coupled to a plurality of non-illustrated pistons that are disposed, one each, in a plurality of non-illustrated cylinders. The stroke of the pistons in the cylinders, and thus the flow rate of the variable displacement piston pump 106, is varied by varying the position of the adjustable hanger 116. The position of the adjustable hanger 116 is varied by the hanger actuator 118. The hanger actuator 118 includes a pump control pressure inlet port 119 that is in fluid communication with, and thus receives pump control fluid from, the pump compensator 110. As will be described in more detail further below, the hanger actuator 118 is responsive to fluid pressure variations of the pump control fluid to move the adjustable hanger 116.

The metering valve 108 is positioned in flow-series in the supply line 114 downstream of the variable displacement piston pump 106 and upstream of the shutoff valve 122. The metering valve 108 includes an inlet port 124, and outlet port 126, a variable area flow orifice 128, and an actuator 132. A portion of the fuel in the supply line 114 flows into the metering valve inlet port 124, through the variable area flow orifice 128, and out the metering valve outlet port 126. The metering valve actuator 132 is used to adjust the position of the metering valve 108, and thus the area of the variable area flow orifice 128. In the depicted embodiment, the metering valve 108 is a hydraulically-operated valve and the metering valve actuator 132 is an electro-hydraulic servo valve (EHSV) that is used to adjust the position of the metering valve 108 by controlling the flow of operational hydraulic fluid to the metering valve 108. It will be appreciated, however, that this is merely exemplary of a particular embodiment, and that the metering valve 108 and actuator 132 may each be implemented using other types of devices. For example, the metering valve 108 could be an electrically operated valve. In this case, the metering valve actuator 132, may not be used, or it could be implemented as an independent controller. In any case, as will be described further below, fuel flow rate to the engine combustor 112-1 is controlled by adjusting the position of the metering valve 108, and thus the area of the variable area flow orifice 128, via the metering valve actuator 132.

As FIG. 1 also depicts, a position sensor 134 is coupled to the metering valve 108. The position sensor 134 is configured to sense metering valve position and supply a metering valve position signal to the engine controller 150. The position of the metering valve 108 is directly related to the area of the variable area flow orifice 128, which is directly related to the fuel flow rate to the combustor 112-1. The position sensor 134 is preferably a dual channel linear variable differential transformer (LVDT), but could be any one of numerous position sensing devices known in the art. For example, the position sensor 134 could be a rotary variable differential transformer (RVDT), an optical sensor, a potentiometer sensor, or the like.

The pump compensator 110 is in fluid communication with the hanger actuator 118 and, as previously noted, supplies pump control fluid to the hanger actuator 118. The pump compensator 110 includes at least a pump control pressure outlet port 136 and a mode control pressure port 138. The pump control pressure outlet port 136 is in fluid communication with, and supplies the pump control fluid to, the hanger actuator pump control pressure inlet port 119. The mode control pressure port 138 is coupled to a non-illustrated fluid pressure source. Though not depicted in FIG. 1, it will be appreciated that in some embodiments the mode control pressure port 138 and the shutoff valve position control pressure port 123 may be coupled to the same fluid pressure source. In any case, the pump compensator 110, which is preferably a dual mode device, is configured to be responsive to fluid pressure at the mode control pressure port 138 to operate in either a normal mode or a shutdown mode. Before proceeding further, the overall operation of the pump compensator 110 in each of these modes will first be described.

In the normal mode, the pump compensator 110 controls the fluid pressure of the pump control fluid supplied to the hanger actuator 118 such the variable displacement pump supplies fuel at a rate to maintain a constant differential pressure across the metering valve 108. It is generally known that engine nozzle backpressure varies as a function of the metered flow rate through the metering valve 108 to the combustor 112-1. Hence, in order to maintain the differential pressure across the metering valve 108, the discharge pressure of the variable displacement piston pump 106 also varies as a function of metered flow. It may thus be appreciated that the pump controller 110, in the normal mode, controls the fluid pressure of the pump control fluid supplied to the hanger actuator 118 such that the variable displacement piston pump 106 is controlled in accordance with a variable flow/variable discharge pressure scheme. In the shutdown mode, the pump compensator 110 controls the fluid pressure of the pump control fluid supplied to the hanger actuator 118 such that the variable displacement piston pump 106 is controlled in accordance with a variable flow/constant discharge pressure scheme. This is because, as will be described below, the pump compensator 110 is placed in the shutdown mode when the configuration of the system 100 is such that the variable displacement piston pump 106 only needs to supply an amount of flow sufficient to make up for internal losses and, if needed or desired, to maintain sufficient pressure to supply fuel to one or more of the other fuel loads 112-2, 112-3, 112-4, ... 112-N. A particular embodiment of the pump compensator 110 that is configured to implement this functionality will be described in greater detail further below. However, for completeness of system description, the engine controller 150 will first be briefly discussed.

The engine controller 150, which may be implemented as a Full Authority Digital Engine Controller (FADEC) or other electronic engine controller (EEC), controls the system 100 to operate in a normal mode or a shutdown mode. To do so, the engine controller 150 receives various input signals and, in response, controls the position of the shutoff valve 122 and the fuel flow rate to the combustor 112-1 accordingly. In particular, in the normal mode the engine controller 150 is responsive to an input from, for example, non-illustrated thrust command equipment in a non-illustrated aircraft cockpit, and to the metering valve position signal. It will be appreciated that, at least in some embodiments, the engine controller 150 may additionally receive one or more other signals, and may additionally supply control signals to one or more non-illustrated control devices associated with one or more of the other fuel loads 112-2, 112-3, 112-4, ... 112-N.

In any case, during normal mode the engine controller 150, in response to the signals it receives, causes the fluid pressure at the shutoff valve position control pressure port 123 to be of a magnitude that causes the shutoff valve 122 to move to the open position. The engine controller 150 further causes the fluid pressure at the pump compensator mode control pressure port 138 to be of a magnitude that causes the pump compensator 110 to be configured to operate in its normal mode. The engine controller 150 additionally supplies appropriate fuel flow commands to the metering valve actuator 132. In response to the fuel flow commands, the metering valve actuator 132, as was described above, adjusts the area of the metering valve variable area flow orifice 128 to obtain the desired flow rate to the combustor 112-1. Specifically, the fuel flow rate ($W_F$) to the combustor 112-1 is controlled in accordance with the following flow equation (Equation 1):

$$W_F = K_1 \times A_{MV} \times \sqrt{\Delta P} ,$$

where $K_1$ is a flow constant that is a function of fuel density, fuel temperature, and metering valve discharge coefficient (CD), $A_{MV}$ is the area of the variable area flow orifice 128, which is a known function of metering valve position, and $\Delta P$ is the differential pressure across the metering valve 108. As noted above, when the pump compensator 110 is configured to operate in its normal mode, it controls the position of the adjustable hanger 116 so that a constant $\Delta P$ is maintained across the metering valve 108. Thus, since Klis a constant, the flow rate, WF, is controlled by adjusting the area, A, of the metering valve variable area flow orifice 128.

In the shutdown mode, the engine controller 150 receives a suitable shutdown signal from, for example, non-illustrated equipment in the non-illustrated cockpit. In response, the engine controller 150 causes the fluid pressure at the shutoff valve position control pressure port 123 to be of a magnitude that causes the shutoff valve 122 to move to the closed position. The engine controller 150 also causes the fluid pressure at the pump compensator mode control pressure port 138 to be of a magnitude that causes the pump compensator 110 to be configured to operate in its shutdown mode. In the shutdown mode, the variable displacement piston pump 106, at least initially, is still being driven so that fuel may be supplied to one or more of the other fuel loads 112-2, 112-3, 112-4, ... 112-N. As noted above, the pump compensator 110, in its shutdown mode, controls the fluid pressure of the pump control fluid supplied to the hanger actuator 118 such that the variable displacement piston pump 106 is controlled in accordance with a variable flow/constant discharge pressure scheme.

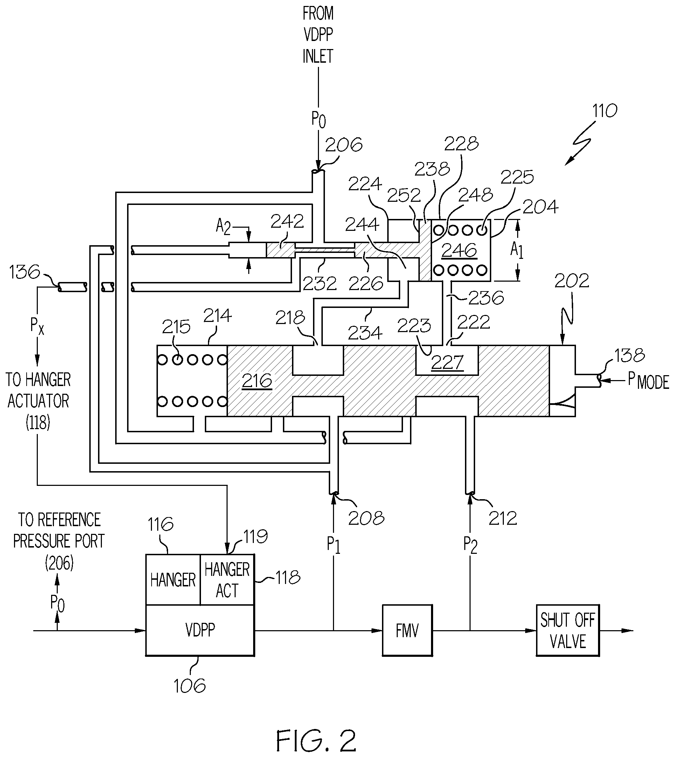

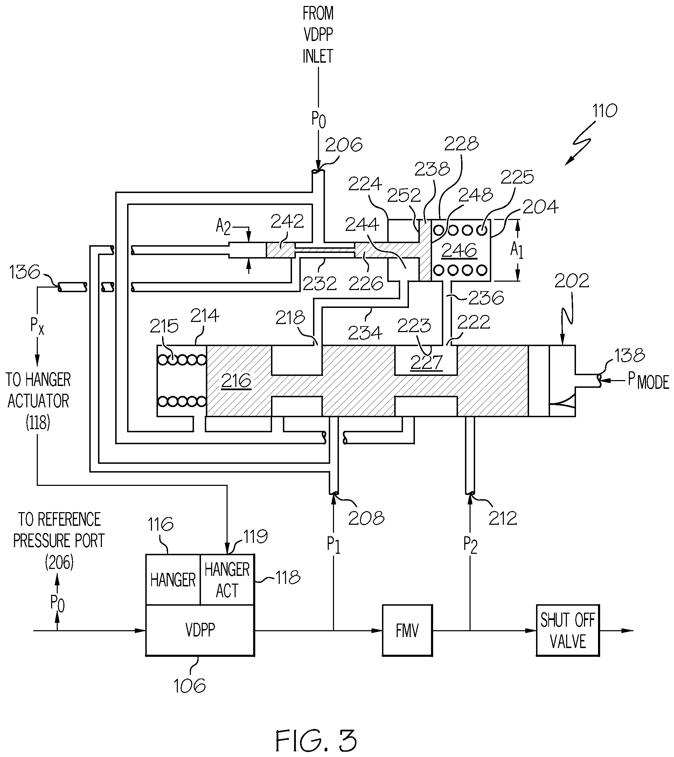

Turning now to FIG. 2, a schematic diagram of a particular embodiment of an exemplary dual mode pump compensator 110 is depicted and will now be described. The pump compensator 110 includes a mode control valve 202 and a compensator valve 204 and, in addition to the pump control pressure outlet port 136 and the mode control pressure port 138, further includes a reference pressure port 206, a first control pressure port 208, and a second control pressure port 212. The mode control valve 202 is responsive to fluid pressure at the mode control pressure port 138 to move between a normal mode position, which is the position depicted in FIG. 2 , and a shutdown mode position, which is the position depicted in FIG. 3 . The compensator valve 204 is in fluid communication with the mode control valve 202 and controls the fluid pressure of the pump control fluid at the pump control pressure outlet port 136, and thus at the hanger actuator pump control pressure inlet port 119, and concomitantly the control scheme of the variable displacement piston pump 106, based on the position of the mode control valve 202. Specifically, when the mode control valve 202 is in the normal mode position, the variable displacement piston pump 106 is controlled in accordance with the variable flow/variable discharge pressure scheme, and when the mode control valve 202 is in the shutdown mode position, the variable displacement piston pump 106 is controlled in accordance with the variable flow/constant discharge pressure scheme.

To implement its above-described functionality, the depicted mode control valve 202 includes a valve body 214, a shuttle valve 216, and a shuttle valve bias spring 215. The valve body 214 includes a first fluid outlet port 218, a second fluid outlet port 222, and an inner surface 223 that defines a shuttle valve chamber 227. The shuttle valve chamber 227 is in fluid communication with the mode control pressure port 138, the reference pressure port 206, the first control pressure port 208, the second control pressure port 212, the first fluid outlet port 218, and the second fluid outlet port 222. The shuttle valve 216 is movably disposed within the shuttle valve chamber 227 and is biased toward the normal mode position via a force supplied thereto from the shuttle valve bias spring 215. The shuttle valve 216 is responsive to the fluid pressure (PMODE) at the mode control pressure port 138, and the force supplied from the shuttle valve bias spring 215, to move between the normal mode position and the shutdown mode position. In the normal mode position, which is the position depicted in FIG. 2 , the first control pressure port 208 and the second control pressure port 212 are in fluid communication with the first fluid outlet port 218 and the second fluid outlet port 222, respectively. In the shutdown mode position, which is the position depicted in FIG. 3 , the reference pressure port 206 is in fluid communication with the first and second fluid outlet ports 218, 222.

To implement its above-described functionality, the compensator valve 204 includes a valve body 224, a valve element 226, and a compensator valve bias spring 225. The valve body 224 includes a first section 228 and a second section 232 of differing cross-sectional areas. In particular, the first section 228 has a first cross-sectional area, and the second section 232 has a second cross sectional area that is less than the first cross sectional area. The valve body first section 228 is in fluid communication with the mode control valve first and second fluid outlets 218, 222 via, for example, suitable conduits 234, 236, and the valve body second section 232 is in fluid communication with the pump control pressure outlet port 136, the reference pressure port 206, and the first control pressure port 208.

The valve element 226 is movably disposed within the valve body 224, and includes a first spool 238 and a second spool 242. The first spool 238, which has a first diameter, is disposed within the valve body first section 228 and divides the valve body first section 228 into two chambers - a first chamber 244 and a second chamber 246. The first chamber 244 is in fluid communication with the mode control valve first fluid outlet 218, and the second fluid chamber 246 is in fluid communication with the mode control valve second fluid outlet 222. The first spool 238 additionally includes a spring side 248 and a doughnut side 252. The spring side 248 is exposed to fluid pressure in the second chamber 246, and is engaged by the compensator valve bias spring 225. The compensator valve bias spring 225 is disposed in the second chamber 246 and supplies a bias force to the valve element 226 that urges the valve element 226 toward the left, as viewed in FIGS. 2 and 3. The second spool 242, which has a second diameter that is less than the first diameter of the, is disposed within the valve body second section 232. The second spool 242 is coupled to, and is fluidly isolated from, the first spool 238, and more specifically is coupled to the doughnut side 252 of the first spool. With this configuration it may thus be seen that the valve element 226 is responsive to the bias force supplied from the compensator valve bias spring 225, the fluid pressure at the first control pressure port 208, and the fluid pressures in the first and second chambers 244, 246, to cause the pump compensator 110 operate in either the normal mode or the shutdown mode.

With continued reference to FIGS. 2 and 3, it is seen that the pump compensator 110 is disposed within the system 100 such that the reference pressure source corresponds to the inlet of the variable displacement piston pump 106. Thus, the reference pressure port 206 is in fluid communication with, and the fluid pressure (P0) at the reference port 206 corresponds to the pressure at, the inlet of the variable displacement piston pump 106. Moreover, the first pump control pressure port 208 is in fluid communication with the metering valve inlet port 124, and the second pump control pressure port 212 is in fluid communication with the metering valve outlet port 126. It may thus be seen that the fluid pressure (P1) at the first pump control pressure port 208 (e.g., the metering valve inlet port 124) is continuously supplied to the compensator valve first spool 238, and the fluid pressure (P0) of the reference pressure source (e.g., the variable displacement piston pump inlet) is continuously supplied to the valve body second section 232 of the compensator valve 204.

It may additionally be seen that the fluid pressures in the compensator valve first and second chambers 244, 246 are set based on the position of the shuttle valve 216. In particular, when the shuttle valve 216 is in the normal mode position (FIG. 2), the fluid pressure (P1) at the first pump control pressure port 208 (e.g., variable displacement piston pump discharge pressure) is supplied to the first chamber 244, and the fluid pressure (P2) at the second pump control pressure port 212 (e.g., the metering valve discharge pressure) is supplied to the second chamber 246. Thus, the pressure differential (P1 - P2) between the first and second pump control pressure ports (e.g., the pressure differential across the metering valve) acts across the full diameter of the first spool 238, which maximizes the head regulation sensitivity in the normal mode. With these fluid pressures supplied to, and acting on, the compensator valve 204, the compensator valve 204 controls the fluid pressure (PX) of the pump control fluid such that the pressure differential between the first and second pump control pressure ports (P1 - P2), or more specifically the pressure differential across the metering valve 108, is maintained constant (or at least substantially constant). It may thus be appreciated that if, for example, the engine controller 150 commands an increase in fuel flow, an increase in metering valve discharge pressure (P2) will result, and the pump compensator 110 will adjust the position of the hanger 116 so that the pump discharge pressure (P1) automatically increases to maintain the constant differential. Conversely, if the engine controller 150 commands a decrease in fuel flow, a decrease in metering valve discharge pressure (P2) will result, and the pump compensator 110 will adjust the position of the hanger 116 so that the pump discharge pressure (P1) automatically decreases to maintain the constant differential.

As described above, when the system 100 is placed in the shutdown mode, the shutoff valve 122 is moved to the closed position, stopping fuel flow from the metering valve to the combustor 112-1. In addition, the fluid pressure (PMODE) at the mode control pressure port 138 is increased to at least a magnitude that allows the shuttle valve 216 to move, against the bias force of the shuttle valve bias spring 215, to the shutdown mode position. As FIG. 3 depicts, when the shuttle valve 216 is in shutdown mode position, the fluid pressure (P0) of the reference pressure source (e.g., the variable displacement piston pump inlet) is supplied to the first and second chambers 244, 246. Thus, the reference pressure (P0) acts on both the spring side 248 and the doughnut side 252 of the first spool 238. With these fluid pressures supplied to, and acting on, the compensator valve 204, the compensator valve 204 controls the fluid pressure (PX) of the pump control fluid such that the pump discharge pressure (P1) is maintained constant (or at least substantially constant). It will be appreciated that the pump discharge pressure (P1) in the shutdown mode may be preset by appropriate selection of the compensator valve diameters. This allows for the provision, if desired, of sufficient internal system pressure to one or more of the other fuel loads 112-2, 112-3, 112-4, ... 112-N. Moreover, because the flow demand in the shutdown mode would typically be only internal leakages/losses, the flow demand on the variable displacement piston pump 106 would be relatively low. Hence, the variable displacement piston pump 106 will de-stroke to only provide the needed flow to maintain its discharge pressure (P1).

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A fluid supply system (100), comprising:

   a variable displacement piston pump (106) including an adjustable hanger (116) that is movable to a plurality of control positions, the variable displacement piston pump (106) configured to receive a drive torque and, upon receipt of the drive torque, to supply fluid at a pump discharge pressure and flow rate dependent on the control position of the adjustable hanger (116); a hanger actuator (118) including a pump control pressure inlet port coupled to receive pump control fluid at a fluid pressure, the hanger actuator (118) responsive to the fluid pressure of the pump control fluid to move the adjustable hanger (116) to a control position; and a pump compensator (110) including a mode control pressure port and a pump control pressure outlet port, the pump compensator pump control pressure outlet port in fluid communication with the hanger actuator pump control pressure inlet port, the pump compensator (110) responsive to fluid pressure at the mode control pressure port to operate in either (i) a normal mode, in which the pump compensator (110) controls the fluid pressure of the pump control fluid such that the variable displacement piston pump (106) is controlled in accordance with a variable flow/variable discharge pressure scheme, or (ii) a shutdown mode, in which the pump compensator (110) controls the fluid pressure of the pump control fluid such that the variable displacement piston pump (106) is controlled in accordance with a variable flow/constant discharge pressure scheme, **characterized in that**:

the pump compensator (110) further includes a reference pressure port, a first control pressure port, and a second control pressure port; the pump compensator (110), in the normal mode, is further responsive to fluid pressure at the first control pressure port and the second control pressure port to control the fluid pressure of the pump control fluid such that a pressure differential between the first control pressure port and the second control pressure port is maintained constant; and the pump compensator (110), in the shutdown mode, is further responsive to fluid pressure at the first control pressure port and the reference pressure port to control the fluid pressure of the pump control fluid such that a pressure differential between the first control pressure port and the reference control pressure port is maintained constant.

2. The system of Claim 1, further comprising:

a metering valve (108) disposed downstream of the variable displacement piston pump (106) and including a variable area flow orifice (128); and a metering valve actuator (132) coupled to receive fluid flow commands and operable, in response thereto, to adjust the variable area flow orifice (128).

3. The system of Claim 2, wherein:

the pump compensator (110), in the normal mode, controls the fluid pressure of the pump control fluid to maintain a substantially constant differential pressure across the metering valve (108); the metering valve (108) further includes an inlet port and an outlet port, and the variable area flow orifice (128) disposed between the inlet port and the outlet port; the pump compensator (110) first control pressure port is in fluid communication with the metering valve (108) inlet port; and the pump compensator (110) second control pressure port is in fluid communication with the metering valve (108) outlet port.

4. The system of Claim 1, wherein the pump compensator (110) comprises:

a mode control valve (202) responsive to fluid pressure at the mode control pressure port to move between a normal mode position and a shutdown mode position; and a compensator valve (204) in fluid communication with the mode control valve (202) and operable to control the fluid pressure of the pump control fluid such that:

(i) when the mode control valve (202) is in the normal mode position, the variable displacement piston pump (106) is controlled in accordance with the variable flow/variable discharge pressure scheme, and (ii) when the mode control valve (202) is in the shutdown mode position, the variable displacement piston pump (106) is controlled in accordance with the variable flow/constant discharge pressure scheme.

5. The system of Claim 4, wherein the mode control valve (202) comprises:

a valve body (214) including a first fluid outlet port and a second fluid outlet port, and having an inner surface (223) that defines a shuttle valve chamber (227), the shuttle valve chamber in fluid communication with the mode control pressure port, the reference pressure port, the first control pressure port, the second control pressure port, the first fluid outlet port, and the second fluid outlet port; and a shuttle valve (216) movably disposed within the shuttle valve chamber and responsive to the fluid pressure at the mode control pressure port to move between (i) the normal mode position, in which the first control pressure port and the second control pressure port are in fluid communication with the first fluid outlet port and the second fluid outlet port, respectively, and (ii) the shutdown mode position, in which the reference pressure port is in fluid communication with the first fluid outlet port and the second fluid outlet port.

6. The system of Claim 5, wherein the compensator valve (204) comprises:

a valve body (224) including a first section (228) and a second section (232), the first section (228) having a first cross sectional area, the second section (232) having a second cross sectional area that is less than the first cross sectional area, the valve body first section (228) in fluid communication with the mode control valve first and second fluid outlets (218, 222), the valve body second section (232) in fluid communication with the pump control pressure outlet port, the reference pressure port, and the first control pressure port; and
a valve element (226) movably disposed within the valve body (214), the valve element (226) comprising:

a first spool (238) disposed within the valve body first section (228) and having a first diameter, the first spool (238) dividing the valve body first section (228) into first and second chambers (244, 246), the first and second chambers (244, 246) in fluid communication with the mode control valve first and second fluid outlets (218, 222), respectively, and
a second spool (242) coupled to, and fluidly isolated from, the first spool (238), the second spool (242) having a second diameter that is less than the first diameter, the second spool (242) disposed within the valve body second section (232),
wherein the valve element (226) is responsive to fluid pressure at the first control pressure port, and fluid pressure in the first and second chambers (244, 246), to operate in either the normal mode or the shutdown mode.

7. The system of Claim 2, further comprising:

a boost pump (104) disposed upstream of, and operable to supply a flow of fluid to, the variable displacement piston pump (106),

wherein:

the variable displacement piston pump (106) further includes a pump inlet in fluid communication with the boost pump (104), and
the pump compensator reference pressure port is in fluid communication with the pump inlet of the variable displacement piston pump (106).

8. The system of Claim 7, further comprising:

a shut-off valve (122) disposed downstream of the metering valve (108) and movable between an open position and a closed position, wherein:

the shut-off valve further includes a position control pressure port that is in fluid communication with the pump compensator mode control pressure port,
the shut-off valve is responsive to fluid pressure at the position control pressure port to move between the open and closed positions,
the pump compensator (110) is in the normal mode when the shut-off valve is in the open position, and
the pump compensator (110) is in the shutdown mode when the shut-off valve is in the closed position.

**Patentansprüche**

1. Fluidzufuhrsystem (100), umfassend:

eine Kolbenpumpe (106) mit variabler Verdrängung, einschließlich einer einstellbaren Hängeinrichtung (116), die in eine Mehrzahl von Steuerpositionen bewegbar ist, wobei die Kolbenpumpe (106) mit variabler Verdrängung dazu gestaltet ist, ein Antriebsmoment zu empfangen und bei Empfang des Antriebsmoments Fluid mit einem Pumpenabgabedruck und einer Strömungsgeschwindigkeit in Abhängigkeit von der Steuerposition der einstellbaren Hängeinrichtung (116) zuzuführen;
einen Hängeinrichtungsaktor (118) einschließlich einer Pumpensteuerungsdruckeinlassöffnung, die dazu gekoppelt ist, Pumpensteuerungsfluid mit einem Fluiddruck zu empfangen, wobei der Hängeinrichtungsaktor (118) auf den Fluiddruck des Pumpensteuerungsfluids anspricht, um die einstellbare Hängeinrichtung (116) in eine Steuerposition zu bewegen; und

einen Pumpenkompensator (110), der eine Modussteuerungsdrucköffnung und eine Pumpensteuerungsdruckauslassöffnung einschließt, wobei die Pumpensteuerungsdruckauslassöffnung des Pumpenkompensators in Fluidverbindung mit der Pumpensteuerungsdruckeinlassöffnung des Hängeinrichtungsaktors steht, wobei der Pumpenkompensator (110) auf Fluiddruck an der Modussteuerungsdrucköffnung anspricht, um in entweder (i) einem Normalmodus zu arbeiten, in dem der Pumpenkompensator (110) den Fluiddruck des Pumpensteuerungsfluids steuert, sodass die Kolbenpumpe (106) mit variabler Verdrängung in Übereinstimmung mit einem Variabler-Durchfluss/Variabler-Austritt-Druckschema gesteuert wird, oder (ii) einem Abschaltmodus zu arbeiten, in dem der Pumpenkompensator (110) den Fluiddruck des Pumpensteuerungsfluids so steuert, dass die Kolbenpumpe (106) mit variabler Verdrängung in Übereinstimmung mit einem Variabler-Durchfluss/Konstanter-Austritt-Druckschema gesteuert wird, **dadurch gekennzeichnet, dass**:

der Pumpenkompensator (110) ferner eine Referenzdrucköffnung, eine erste Steuerdrucköffnung und eine zweite Steuerdrucköffnung einschließt;
der Pumpenkompensator (110) im Normalmodus ferner auf Fluiddruck an der ersten Steuerdrucköffnung und der zweiten Steuerdrucköffnung anspricht, um den Fluiddruck des Pumpensteuerungsfluids so zu steuern, dass eine Druckdifferenz zwischen der ersten Steuerdrucköffnung und der zweiten Steuerdrucköffnung konstant gehalten wird; und
der Pumpenkompensator (110) im Abschaltmodus ferner auf Fluiddruck an der ersten Steuerdrucköffnung und der Referenzdrucköffnung anspricht, um den Fluiddruck des Pumpensteuerungsfluids so zu steuern, dass eine Druckdifferenz zwischen der ersten Steuerdrucköffnung und der Referenzsteuerdrucköffnung konstant gehalten wird.

2. System nach Anspruch 1, ferner umfassend:

ein Dosierventil (108), das stromabwärts der Kolbenpumpe (106) mit variabler Verdrängung angeordnet ist und eine Öffnung (128) mit variabler Strömungsfläche einschließt; und
einen Dosierventilaktor (132), der dazu gekoppelt ist, Fluidströmungsbefehle zu empfangen, und dazu betreibbar ist, in Reaktion darauf die Öffnung (128) mit variabler Strömungsfläche einzustellen.

3. System nach Anspruch 2, wobei:

der Pumpenkompensator (110) im Normalmodus den Fluiddruck des Pumpensteuerungsfluids steuert, um einen im Wesentlichen konstanten Differenzdruck über dem Dosierventil (108) aufrechtzuhalten;
das Dosierventil (108) ferner eine Einlassöffnung und eine Auslassöffnung einschließt und die Öffnung (128) mit variabler Strömungsfläche zwischen der Einlassöffnung und der Auslassöffnung angeordnet ist;
die erste Steuerdrucköffnung des Pumpenkompensators (110) mit der Einlassöffnung des Dosierventils (108) in Fluidverbindung steht; und
die zweite Steuerdrucköffnung des Pumpenkompensators (110) mit der Auslassöffnung des Dosierventils (108) in Fluidverbindung steht.

4. System nach Anspruch 1, wobei der Pumpenkompensator (110) Folgendes umfasst:

ein Modussteuerungsventil (202), das auf Fluiddruck an der Modussteuerungsdrucköffnung anspricht, um sich zwischen einer Normalmodusposition und einer Abschaltmodusposition zu bewegen; und
ein Kompensatorventil (204), das mit dem Modussteuerungsventil (202) in Fluidverbindung steht und dazu betreibbar ist, den Fluiddruck des Pumpensteuerungsfluid so zu steuern, dass:

(i) wenn sich das Modussteuerungsventil (202) in der Normalmodusposition befindet, die Kolbenpumpe (106) mit variabler Verdrängung in Übereinstimmung mit dem Variabler-Durchfluss/Variabler-Austritt-Druckschema gesteuert wird, und
(ii) wenn sich das Modussteuerungsventil (202) in der Abschaltmodusposition befindet, die Kolbenpumpe (106) mit variabler Verdrängung in Übereinstimmung mit dem Variabler-Durchfluss/Konstanter-Austritt-Druckschema gesteuert wird.

5. System nach Anspruch 4, wobei das Modussteuerungsventil (202) Folgendes umfasst:

einen Ventilkörper (214), der eine erste Fluidauslassöffnung und eine zweite Fluidauslassöffnung einschließt und eine Innenfläche (223) aufweist, die eine Wechselventilkammer (227) definiert, wobei die Wechselventilkammer mit der Modussteuerungsdrucköffnung, der Referenzdrucköffnung, der ersten Steuerdrucköffnung, der zweiten Steuerdrucköffnung, der ersten Fluidauslassöffnung und der zweiten Fluidauslassöffnung in Fluidverbindung steht; und

ein Wechselventil (216), das innerhalb der Wechselventilkammer bewegbar angeordnet ist und auf den Fluiddruck an der Modussteuerungsdrucköffnung anspricht, um sich zwischen (i) der Normalmodusposition, in der die erste Steuerdrucköffnung und die zweite Steuerdrucköffnung in Fluidverbindung mit der ersten Fluidauslassöffnung bzw. der zweiten Fluidauslassöffnung stehen, und (ii) der Abschaltmodusposition, in der die Referenzdrucköffnung mit der ersten Fluidauslassöffnung und der zweiten Fluidauslassöffnung in Fluidverbindung steht, zu bewegen.

6. System nach Anspruch 5, wobei das Kompensatorventil (204) Folgendes umfasst:

einen Ventilkörper (224), der einen ersten Abschnitt (228) und einen zweiten Abschnitt (232) einschließt, wobei der erste Abschnitt (228) eine erste Querschnittsfläche aufweist, wobei der zweite Abschnitt (232) eine zweite Querschnittsfläche aufweist, die kleiner als die erste Querschnittsfläche ist, wobei der erste Abschnitt (228) des Ventilkörpers mit dem ersten und dem zweiten Fluidauslass (218, 222) des Modussteuerungsventils in Fluidverbindung steht, wobei der zweite Abschnitt (232) des Ventilkörpers mit der Pumpensteuerungsdruckauslassöffnung, der Referenzdrucköffnung und der ersten Steuerdrucköffnung in Fluidverbindung steht; und

ein Ventilelement (226), das innerhalb des Ventilkörpers (214) bewegbar angeordnet ist, wobei das Ventilelement (226) Folgendes umfasst:

einen ersten Schieber (238), der innerhalb des ersten Abschnitts (228) des Ventilkörpers angeordnet ist und einen ersten Durchmesser aufweist, wobei der erste Schieber (238) den ersten Abschnitt (228) des Ventilkörpers in eine erste und eine zweite Kammer (244, 246) unterteilt, wobei die erste und die zweite Kammer (244, 246) mit dem ersten bzw. dem zweiten Fluidauslass (218, 222) des Modussteuerungsventils in Fluidverbindung stehen, und einen zweiten Schieber (242), der mit dem ersten Schieber (238) gekoppelt und fluidisch von selbigem getrennt ist, wobei der zweite Schieber (242) einen zweiten Durchmesser aufweist, der kleiner als der erste Durchmesser ist, wobei der zweite Schieber (242) innerhalb des zweiten Abschnitts (232) des Ventilkörpers angeordnet ist, wobei das Ventilelement (226) auf Fluiddruck an der ersten Steuerdrucköffnung und auf Fluiddruck in der ersten und der zweiten Kammer (244, 246) anspricht, um entweder im Normalmodus oder im Abschaltmodus zu arbeiten.

7. System nach Anspruch 2, ferner umfassend:

eine Verstärkungspumpe (104), die stromaufwärts der Kolbenpumpe (106) mit variabler Verdrängung angeordnet und dazu betreibbar ist, selbiger einen Fluidstrom zuzuführen, wobei:

die Kolbenpumpe (106) mit variabler Verdrängung ferner einen Pumpeneinlass einschließt, der mit der Verstärkungspumpe (104) in Fluidverbindung steht, und die Referenzdrucköffnung des Pumpenkompensators mit dem Pumpeneinlass der Kolbenpumpe (106) mit variabler Verdrängung in Fluidverbindung steht.

8. System nach Anspruch 7, ferner umfassend:
ein Absperrventil (122), das stromabwärts des Dosierventils (108) angeordnet und zwischen einer offenen Position und einer geschlossenen Position bewegbar ist, wobei:

das Absperrventil ferner eine Positionssteuerdrucköffnung einschließt, die mit der Modussteuerungsdrucköffnung des Pumpenkompensators in Fluidverbindung steht, das Absperrventil auf Fluiddruck an der Positionssteuerdrucköffnung anspricht, um sich zwischen der offenen und der geschlossenen Position zu bewegen, der Pumpenkompensator (110) im Normalmodus ist, wenn sich das Absperrventil in der offenen Position befindet, und der Pumpenkompensator (110) im Abschaltmodus ist, wenn sich das Absperrventil in der geschlossenen Position befindet.

## Revendications

1. Système d'alimentation en fluide (100), comprenant :

une pompe à piston à cylindrée variable (106) comprenant un support réglable (116) qui peut être déplacé dans une pluralité de positions de commande, la pompe à piston à cylindrée variable (106) étant conçue pour recevoir un couple d'entraînement et, suite à la réception du couple d'entraînement, pour délivrer un fluide à une pression de refoulement et à un débit de la pompe dépendants de la position de commande du support réglable (116) ;

un actionneur de support (118) incluant un port d'entrée de pression de commande de pompe couplé pour recevoir un fluide de commande de pompe à une pression de fluide, l'actionneur de support (118) répondant à la pression de fluide du fluide de commande de pompe pour déplacer le support réglable (116) dans une position de commande ; et

un compensateur de pompe (110) incluant un port de pression de commande de mode et un port de sortie de pression de commande de pompe, le port de sortie de pression de commande de pompe du compensateur de pompe étant en communication de fluide avec le port d'entrée de pression de commande de pompe de l'actionneur de support, le compensateur de pompe (110) répondant à la pression de fluide sur le port de pression de commande de mode pour fonctionner, soit (i) en mode normal, dans lequel le compensateur de pompe (110) commande la pression de fluide du fluide de commande de pompe de sorte que la pompe à piston à cylindrée variable (106) soit commandée conformément à un schéma de débit variable/pression de refoulement variable, soit (ii) en mode arrêt, dans lequel le compensateur de pompe (110) commande la pression de fluide du fluide de commande de pompe de sorte que la pompe à piston à cylindrée variable (106) soit commandée conformément à un schéma de débit variable/pression de refoulement constante, **caractérisé en ce que** :

le compensateur de pompe (110) comprend en outre un port de pression de référence, un premier port de pression de commande et un second port de pression de commande ;

le compensateur de pompe (110), dans le mode normal, répond en outre à la pression de fluide sur le premier port de pression de commande et le second port de pression de commande pour commander la pression de fluide du fluide de commande de pompe de sorte qu'une pression différentielle entre le premier port de pression de commande et le second port de pression de commande soit maintenue constante ; et

le compensateur de pompe (110), dans le mode arrêt, répond en outre à la pression de fluide sur le premier port de pression de commande et le port de pression de référence pour commander la pression de fluide du fluide de commande de pompe de sorte qu'une pression différentielle entre le premier port de pression de commande et le port de pression de commande de référence soit maintenue constante.

2. Système selon la revendication 1, comprenant en outre :

une soupape de dosage (108) disposée en aval de la pompe à piston à cylindrée variable (106) et incluant un orifice d'écoulement à surface variable (128) ; et

un actionneur de soupape de dosage (132) couplé pour recevoir des commandes de débit de fluide et pouvant fonctionner, en réponse à celles-ci, pour régler l'orifice d'écoulement à surface variable (128).

3. Système selon la revendication 2, dans lequel :

le compensateur de pompe (110), dans le mode normal, commande la pression de fluide du fluide de commande de pompe pour maintenir une pression différentielle sensiblement constante dans la soupape de dosage (108) ;

la soupape de dosage (108) comprend en outre un port d'entrée et un port de sortie, et l'orifice d'écoulement à surface variable (128) est disposé entre le port d'entrée et le port de sortie ;

le premier port de pression de commande du compensateur de pompe (110) est en communication de fluide avec le port d'entrée de la soupape de dosage (108) ; et

le second port de pression de commande du compensateur de pompe (110) est en communication de fluide avec le port de sortie de la soupape de dosage (108) .

4. Système selon la revendication 1, dans lequel le compensateur de pompe (110) comprend :

une soupape de commande de mode (202) répondant à la pression de fluide sur le port de pression de commande de mode pour basculer entre une position de mode normal et une position de mode arrêt ; et

une soupape de compensateur (204) en communication de fluide avec la soupape de commande de mode (202) et pouvant fonctionner pour commander la pression de fluide du fluide de commande de pompe de sorte que :

(i) lorsque la soupape de commande de mode (202) est dans la position de mode normal, la pompe à piston à cylindrée variable (106) est commandée conformément au schéma de débit variable/pression de refoulement variable, et

(ii) lorsque la soupape de commande de mode (202) est dans la position de mode arrêt, la pompe à piston à cylindrée variable (106) est commandée conformément au schéma de débit variable/pression de refoulement constante.

**5.** Système selon la revendication 4, dans lequel la soupape de commande de mode (202) comprend :

un corps de soupape (214) comprenant un premier port de sortie de fluide et un second port de sortie de fluide, et ayant une surface intérieure (223) qui définit une chambre de vanne sélectrice (227), la chambre de vanne sélectrice étant en communication de fluide avec le port de pression de commande de mode, le port de pression de référence, le premier port de pression de commande, le second port de pression de commande, le premier port de sortie de fluide et le second port de sortie de fluide ; et

une vanne sélectrice (216) disposée mobile à l'intérieur de la chambre de vanne sélectrice et répondant à la pression de fluide sur le port de pression de commande de mode pour basculer entre (i) la position de mode normal, dans laquelle le premier port de pression de commande et le second port de pression de commande sont en communication de fluide avec le premier port de sortie de fluide et le second port de sortie de fluide, respectivement, et (ii) la position de mode arrêt, dans laquelle le port de pression de référence est en communication de fluide avec le premier port de sortie de fluide et le second port de sortie de fluide.

**6.** Système selon la revendication 5, dans lequel la soupape de compensateur (204) comprend :

un corps de soupape (224) comprenant une première section (228) et une seconde section (232), la première section (228) ayant une première section en coupe, la seconde section (232) ayant une seconde section en coupe qui est inférieure à la première section en coupe, la première section (228) du corps de soupape étant en communication de fluide avec les première et seconde sorties de fluide (218, 222) de la soupape de commande de mode, la seconde section (232) du corps de soupape étant en communication de fluide avec le port de sortie de pression de commande de pompe, le port de pression de référence, et le premier port de pression de commande ; et

un élément de soupape (226) disposé mobile à l'intérieur du corps de soupape (214), l'élément de soupape (226) comprenant :

une première bobine (238) disposée à l'intérieur de la première section (228) du corps de soupape et ayant un premier diamètre, la première bobine (238) divisant la première section (228) du corps de soupape en des première et seconde chambres (244, 246), les première et seconde chambres (244, 246) étant en communication de fluide avec les première et seconde sorties de fluide (218, 222) de la soupape de commande de mode, respectivement ; et

une seconde bobine (242) couplée à et isolée fluidiquement de la première bobine (238), la seconde bobine (242) ayant un second diamètre qui est inférieur au premier diamètre, la seconde bobine (242) étant disposée à l'intérieur de la seconde section (232) du corps de soupape,

dans lequel l'élément de soupape (226) répond à la pression de fluide sur le premier port de pression de commande, et à la pression de fluide dans les première et seconde chambres (244, 246) pour fonctionner dans l'un ou l'autre du mode normal et du mode arrêt.

**7.** Système selon la revendication 2, comprenant en outre :

une pompe d'amorçage (104) disposée en amont de, et pouvant fonctionner pour alimenter un écoulement de fluide vers, la pompe à piston à cylindrée variable (106), dans lequel :

la pompe à piston à cylindrée variable (106) comprend en outre une entrée de pompe en communication de fluide avec la pompe d'amorçage (104), et

le port de pression de référence du compensateur de pompe est en communication de fluide avec l'entrée de pompe de la pompe à piston à cylindrée variable (106).

**8.** Système selon la revendication 7, comprenant en outre :

une soupape d'arrêt (122) disposée en aval de la soupape de dosage (108) et pouvant basculer entre une position ouverte et une position fermée, dans lequel :

la soupape d'arrêt comprend en outre un port de pression de commande de position qui est en communication de fluide avec le port de pression de commande de mode du compensateur de la pompe, la soupape d'arrêt répond à la pression de fluide sur le port de pression de commande de position pour basculer entre les positions ouverte et fermée, le compensateur de pompe (110) est dans le mode normal lorsque la soupape d'arrêt est dans la position ouverte, et

le compensateur de pompe (110) est dans le mode arrêt lorsque la soupape d'arrêt est dans la position fermée.

FIG. 1

EP 2 025 933 B1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60952717 A
- US 2002144512 A

- GB 1163712 A